# EUROPÄISCHE PATENTANMELDUNG

(11) **EP 4 714 725 A1**
(43) Veröffentlichungstag der Anmeldung: **25.03.2026**
(21) Anmeldenummer: 25192341.3
(22) Anmeldetag: 29.07.2025
(51) Int. Cl.: B60L 50/60, B60L 58/13, B60L 58/14, B60L 58/21, B60L 58/22

(54) **TRAKTIONSSYSTEM FÜR EIN BATTERIEELEKTRISCHES FAHRZEUG**

(30) Priorität: 24.09.2024 DE 102024209189
(71) Anmelder: Siemens Mobility GmbH, 80997 München (DE)
(72) Erfinder: Jaumann, Tony, 91227 Leinburg (DE); Lingen, Christian, 91054 Erlangen (DE)
(74) Vertreter: Siemens Patent Attorneys

(57) **Zusammenfassung**

Die Erfindung betrifft ein Traktionssystem für ein batterieelektrisches Fahrzeug, insbesondere ein Schienenfahrzeug, wobei das Traktionssystem mindestens einen Traktionsstromrichter, eine Mehrzahl von Batteriesystemen, wobei jeweils mehrere Batteriesysteme mit einem Traktionsstromrichter elektrisch verbunden sind, und wobei jedes der Batteriesysteme einzeln mit dem Traktionsstromrichter verbindbar ist, mindestens ein Zusatz-Batteriesystem, eine Schalteinheit, die dazu ausgelegt ist, das Zusatz-Batteriesystem parallel und/oder alternativ zu einer Anzahl der Batteriesysteme zu schalten, und eine Steuereinheit umfasst, die ausgelegt ist zur Steuerung der Schalteinheit gemäß einer Schaltvorgabe, wobei die Schaltvorgabe vorgibt, in welchem Fall oder zu welchem Zeitpunkt das Zusatz-Batteriesystem parallel und/oder alternativ zu der Anzahl der Batteriesysteme geschaltet werden soll.

## Beschreibung

Die Erfindung betrifft ein Traktionssystem für ein batterieelektrisches Fahrzeug, ein Verfahren zum Betreiben eines Traktionssystems sowie ein Fahrzeug.

Aktuell wird in batterieelektrischen Triebzügen, auch als BEMU ("Battery Electric Multiple Unit") bezeichnet, eine symmetrische Anzahl an Batteriezweigen bzw. Batteriesystemen, umfassend jeweils eine Mehrzahl zusammengeschalteter Batteriezellen, auf jeweils zwei Gleichspannungswandler bzw. DC/DC Steller und Traktionsstromrichter aufgeteilt. Der Ausdruck "symmetrische Anzahl" bedeutet dabei, dass jede Phase des Wandlers bzw. Stellers mit einer gleichen Anzahl von Batteriesystemen belegt ist. Beispielsweise können insgesamt sechs Stellerphasen existieren, die mit jeweils einem Batteriesystem belegt sind. Aus Kostengründen sollten die Batteriesysteme bezüglich ihrer Parameter, insbesondere ihrer jeweiligen Nennspannung und Kapazität, identisch sein.

Neuentwicklungen von Batteriesystemen sind aufwändig und kostenintensiv, daher sollte auf bestehende Batteriesysteme zur Schaffung neuer Batteriesysteme zurückgegriffen werden. Damit sind die Freiheitsgrade zur Maximierung von Energie und Leistung auf Fahrzeugen stark eingeschränkt.

Es ist eine Aufgabe der vorliegenden Erfindung, ein Traktionssystem für ein batterieelektrisches Fahrzeug, ein Verfahren zum Betrieb eines Traktionsstromrichter-Systems und ein Fahrzeug anzugeben, mit denen die oben beschriebenen Nachteile vermieden werden. Insbesondere ist es eine Aufgabe der Erfindung ein Batteriesystem zur Traktion von Fahrzeugen möglichst homogen bzw. universal verwenden zu können.

Diese Aufgabe wird durch ein Traktionssystem, ein Verfahren und ein Fahrzeug mit den jeweiligen Merkmalen der unabhängigen Patentansprüche gelöst.

Ein erfindungsgemäßes Traktionssystem für ein batterieelektrisches Fahrzeug, insbesondere ein Schienenfahrzeug, umfasst mindestens einen Traktionsstromrichter, eine Mehrzahl von Batteriesystemen, wobei jeweils mehrere Batteriesysteme mit einem Traktionsstromrichter elektrisch verbunden sind, und wobei jedes der Batteriesysteme einzeln mit dem Traktionsstromrichter verbindbar ist, mindestens ein Zusatz-Batteriesystem, eine Schalteinheit, die dazu ausgelegt ist, das Zusatz-Batteriesystem parallel und/oder alternativ zu einer Anzahl der Batteriesysteme zu schalten, und eine Steuereinheit, die ausgelegt ist zur Steuerung der Schalteinheit gemäß einer Schaltvorgabe, wobei die Schaltvorgabe vorgibt, in welchem Fall oder zu welchem Zeitpunkt das Zusatz-Batteriesystem parallel und/oder alternativ zu der Anzahl der Batteriesysteme geschaltet werden soll.

Im Unterschied zu bekannten Traktionssystemen für batterieelektrische Fahrzeuge besteht die Besonderheit der Erfindung in dem als Zusatz-Batteriesystem nutzbaren Batteriesystem. Das erfindungsgemäße Traktionssystem ist dabei besonders für Schienenfahrzeuge, beispielsweise Triebzüge für den Regional- und Fernverkehr, vorteilhaft. Es kann jedoch in gleicher Weise auch für batterieelektrische Straßenfahrzeuge, insbesondere für batteriebetriebene Lastkraftwagen oder Busse, von Vorteil sein.

Das erfindungsgemäße Traktionssystem umfasst mindestens einen Traktionsstromrichter, mehrere Batteriesysteme, eine Schalteinheit und eine Steuereinheit.

Mehrere Batteriezweige bzw. Batteriesysteme sind beispielsweise über einen Gleichspannungswandler mit einem Gleichspannungszwischenkreis eines Traktionsstromrichters verbunden. Dabei sind die Batteriesysteme mit einer jeweiligen Phase des Gleichspannungswandlers verbunden, welche individuell von einer Steuereinheit geschaltet werden können, sodass die Batteriesysteme entsprechend individuell schaltbar sind. Sofern das Traktionssystem des Fahrzeugs mehrere Traktionsstromrichter umfasst, können jeweils mehrere Batteriesysteme mit jedem der Traktionsstromrichter über einen jeweiligen Gleichspannungswandler verbunden sein. Die Traktionsstromrichter und/oder ihre jeweiligen Batteriesysteme können dabei miteinander verbunden sein.

Die Besonderheit der Erfindung liegt darin, dass mindestens ein Zusatz-Batteriesystem vorhanden ist. Dieses muss nicht unbedingt ein Batteriesystem sein, das an einer Position angeordnet ist, welche sich von denen der anderen Batteriesysteme deutlich unterscheidet. Vielmehr muss das Zusatz-Batteriesystem lediglich die Funktion eines ergänzenden, zusätzlichen Batteriesystems erfüllen. Dies wird durch die Schalteinheit und die Steuereinheit erreicht.

Für die nachfolgenden genaueren Erläuterungen ist eine Ausführungsform vorstellbar, bei der jeweils eine Mehrzahl von Batteriesystemen in bekannter Weise mit einer Anzahl von Traktionsstromrichtern verbunden ist und das Zusatz-Batteriesystem ein zusätzliches Batteriesystem darstellt. In diesem Fall wäre die Schalteinheit bevorzugt eine zusätzliche Phase des Gleichspannungswandlers. Es ist jedoch auch eine Ausführungsform vorstellbar, bei der jeweils eine Mehrzahl von Batteriesystemen mit einer Anzahl von Traktionsstromrichtern verbunden ist und mindestens eines der Batteriesysteme als Zusatz-Batteriesystem fungiert. In diesem Fall würden die Phasen des Gleichspannungswandlers die Schalteinheit mit umfassen bzw. eine der Phasen als Schalteinheit ausgestaltet sein und von der Steuereinheit auf besondere Weise angesteuert werden.

Im Folgenden wird die Funktion von Zusatz-Batteriesystem, Schalteinheit und Steuereinheit näher erläutert.

Die Schalteinheit dient dazu, das mindestens eine Zusatz-Batteriesystem parallel und/oder alternativ zu einer Anzahl der Batteriesysteme zu schalten. Dies bedeutet insbesondere, dass:
- die Schalteinheit Schalter, insbesondere Leistungshalbleiterschalter, aufweist, mit denen das Zusatz-Batteriesystem mit einer Mehrzahl der anderen Batteriesysteme so verbunden werden kann, dass es diese auflädt oder bei ihrer Leistungsabgabe unterstützt. Die Schalteinheit ist dabei bevorzugt dazu ausgelegt, eine Parallelschaltung zwischen dem Zusatz-Batteriesystem und einer Mehrzahl der Batteriesysteme herzustellen.
- die Schalteinheit Schalter aufweist, mit denen das Zusatz-Batteriesystem mit einem Gleichspannungswandler verbunden werden kann, sodass das Zusatz-Batteriesystem die Leistungsabgabe eines anderen Batteriesystems unterstützt.
- die Schalteinheit Schalter aufweist, mit denen Batteriesysteme mit einem Gleichspannungswandler verbunden und von diesem getrennt werden können, um ein Zusatz-Batteriesystem alternativ zu dem Batteriesystem mit dem betreffenden Teil des Traktionsstromrichters zu verbinden oder das betreffende Batteriesystem ohne Verbindung mit dem Traktionsstromrichter oder zumindest ohne Kontakt mit einer Traktionseinheit aufzuladen,

Die Schalteinheit kann bevorzugt Teil eines Gleichspannungswandlers sein, der mit dem Zusatz-Batteriesystem elektrisch verbunden ist und dieses zusätzlich oder alternativ zu einem anderen Batteriesystem mit dem Traktionsstromrichter verbinden kann. Erfindungsgemäß kann der Gleichspannungswandler beispielsweise von dem Traktionsstromrichter getrennt werden, um eine oder mehrere Batteriesysteme ohne Verbindung zum Traktionsstromrichter von dem Zusatz-Batteriesystem aufzuladen.

Was die Steuereinheit betrifft, ist diese also zur entsprechenden Steuerung der Schalteinheit ausgelegt. Die Steuerung wird gemäß einer besonderen Schaltvorgabe vorgenommen, die vorgibt, in welchem Fall oder zu welchem Zeitpunkt das zumindest eine Zusatz-Batteriesystem parallel und/oder alternativ zu einer Anzahl der anderen Batteriesysteme geschaltet werden soll. Was den bestimmten Fall betrifft, ist hier insbesondere ein Ladezustand einer Anzahl von Batteriesystemen gemeint oder eine Leistungsanforderung des Traktionssystems. Was den bestimmten Zeitpunkt betrifft, kann bezüglich eines vorgegebenen Fahrtverlaufs auch ein Zeitpunkt vorgegeben werden, wann ein Schaltvorgang (und welcher) erfolgen soll.

Beispielsweise kann bezüglich eines Aufladens eines der Batteriesysteme der Ladezustand der weiteren Batteriesysteme überwacht werden und bei Unterschreiten ("Fall") eines bestimmten Ladungspegels die Schaltvorgabe vorgeben, dass das betreffende Batteriesystem geladen werden soll. Es kann aber auch anhand eines vorgegebenen Fahrtverlaufs abgeschätzt werden, zu welchem Zeitpunkt ein bestimmter Ladezustand eines Batteriesystems unterschritten sein wird und zu diesem Zeitpunkt das betreffende Batteriesystem geladen werden. Entsprechend kann auch eine Leistungsanforderung gemessen oder anhand eines Fahrtverlaufs abgeschätzt werden und das Zusatz-Batteriesystem zu einem der Batteriesysteme (parallel) zugeschaltet werden. Entsprechendes gilt auch für die Verwendung des Zusatz-Batteriesystems zur Aufnahme einer Bremsleitung durch Rekuperation. Hier kann der Ladezustand des Zusatz-Batteriesystems gemessen oder anhand eines Fahrtverlaufs abgeschätzt werden und nach bestimmten Vorgaben, beispielsweise einem Unterschreiten eines maximalen Ladezustands, das Zusatz-Batteriesystem bei einem Bremsvorgang als Energiespeicher zugeschaltet werden.

Die Funktionsweise und der Aufbau der Steuereinheit hängen beispielsweise von der Art der Schalteinheit ab. Die Steuereinheit kann ein eigenständiges Gerät sein, welches eine eigenständige Schalteinheit steuert, sie kann aber auch Teil einer Steuereinheit eines Traktionsstromrichters sein und diesen mit den oben beschriebenen besonderen Schaltmodi steuern ("Laden eines anderen Batteriesystems", "Unterstützen eines anderen Batteriesystems" und "Laden eines Zusatz-Batteriesystems durch Rekuperation").

Ein erfindungsgemäßes Verfahren dient dem Betreiben eines erfindungsgemäßen Traktionssystems. Das Verfahren umfasst die folgenden Schritte Auswählen einer Anzahl von Zusatz-Batteriesystemen aus einer Mehrzahl von Batteriesystemen, Generieren einer Schaltvorgabe durch die Steuereinheit, wobei die Schaltvorgabe derart gestaltet ist, dass in Abhängigkeit von einem Fahrtverlauf und/oder einem Ladezustand und/oder einer Leistungsanforderung an die Batteriesysteme ein Zusatz-Batteriesystem parallel zu einem anderen Batteriesystem zum Aufladen und/oder zur Unterstützung geschaltet wird und/oder ein Zusatz-Batteriesystem zum Aufladen verschaltet wird, und Steuern der Schalteinheit gemäß der Schaltvorgabe.

Die Auswahl eines Zusatz-Batteriesystems kann sehr einfach sein, wenn von vornherein vorgegeben ist, welches der Batteriesysteme ein (fest definiertes) Zusatz-Batteriesystem ist. Ein Zusatz-Batteriesystem kann aber auch dynamisch ausgewählt werden und damit ein Batteriesystem, welches vorher ein "normales" Batteriesystem war, für ein bestimmtes Zeitintervall als Zusatz-Batteriesystem ausgewählt werden. Diesbezüglich könnte beispielsweise zu vorgegebenen Zeitpunkten überprüft werden, welches Batteriesystem den höchsten Ladezustand hat und eine Anzahl von Batteriesystemen mit dem jeweils höchsten Ladezustand bis zur nächsten Überprüfung als Zusatz-Batteriesysteme vorgegeben werden (zum Laden und Unterstützen). Entsprechendes kann mit Batteriesystemen mit dem geringsten Ladezustand geschehen, wenn es um ein Aufgeladen werden mittels Rekuperation beim Bremsen geht.

Im Grunde ist für das Verfahren somit nur entscheidend, dass eine Anzahl von Zusatz-Batteriesystemen vorgegeben ist.

Es wird eine Schaltvorgabe von der Steuereinheit generiert, welche so gestaltet ist, dass in Abhängigkeit von einem Fahrverlauf und/oder einem Ladezustand und/oder einer Leistungsanforderung an die Batteriesysteme ein Zusatz-Batteriesystem parallel zu einem Batteriesystem zum Aufladen und/oder zur Unterstützung geschaltet wird, und/oder ein Zusatz-Batteriesystem zum Aufladen verschaltet wird. Wird beispielsweise anhand von Messwerten entschieden (also für bestimmte Fälle), ob und wie ein Zusatz-Batteriesystem geschaltet wird, kann die Schaltvorgabe im Grunde von Anfang an vorgegeben sein. Dabei bedeutet "Im Grunde", dass bei einer unveränderlichen Vorgabe, welche Batteriesysteme die Zusatz-Batteriesysteme sind, die Schaltvorgabe fest vorgegeben ist, und bei einer dynamischen Vorgabe von Zusatz-Batteriesystemen die Fälle der Schaltvorgabe fest vorgegeben sind und lediglich die zu schaltenden Schalter bei einer Änderung eines Zusatz-Batteriesystems entsprechend angepasst werden. Diesbezüglich ist es besonders bevorzugt, dass die Schaltvorgabe von vornherein derart vorgegeben ist, dass beim Eintreten von vorgegebenen Fällen oder vorgegebenen Zeitpunkten (in einem Fahrtverlauf) eine jeweils bestimmte (fest vorgegebene) Schaltung erfolgen soll. Die Schalter, die bei dieser Schaltung geschaltet werden, können fest vorgegeben sein (bei fest definierten Zusatz-Batteriesystemen) oder sich ändern (bei einer dynamischen Vorgabe von Zusatz-Batteriesystemen).

Die Steuereinheit des Traktionssystems wird dann gemäß der Schaltvorgabe gesteuert. Die Steuerung erfolgt dabei bevorzugt derart, dass zu vorgegebene Kriterien ein Batteriesystem durch ein Zusatz-Batteriesystem geladen wird, ein Zusatz-Batteriesystem zur Unterstützung eines Batteriesystems zu diesem (parallel) hinzugeschaltet wird, oder ein Zusatz-Batteriesystem mittels Rekuperation durch Bremsleistung geladen wird.

Ein erfindungsgemäßes Fahrzeug ist insbesondere ein batterieelektrisch angetriebenes Schienenfahrzeug, beispielsweise eine BEMU, und umfasst ein Traktionssystem gemäß der Erfindung.

In der Praxis ist eine unsymmetrische Anbindung der Batteriesysteme an die Gleichspannungswandler bzw. deren Stellerphasen bevorzugt. Dadurch kommt ein Freiheitsgrad hinzu, welcher es ermöglicht, die zur Verfügung stehende Traktionsenergie zu erhöhen und damit die Reichweite des Fahrzeugs zu erhöhen, ohne hohe Einmalkosten für eine Änderung des Traktionssystems zu verursachen.

Üblicherweise werden bei einer symmetrischen Anbindung jeweils eine Anzahl (zumeist vier bis sechs) von Batteriesystemen mit Stellerphasen eines Gleichspannungswandlers verbunden und diese Batteriesysteme weitgehend symmetrisch aufgeladen und entladen. Wenn nun aber die Energie in der symmetrischen Anordnung für bestimmte Strecken oder Umgebungsbedingungen nicht ausreichend ist, kann das Zusatz-Batteriesystem die übrigen Batteriesysteme über eine Umladefunktion wieder teilweise aufladen. Das Umladen auf alle jeweiligen Batteriesysteme ist vorteilhaft, da ein Aufladen nur eines Batteriesystems zu großen Leistungseinschränkungen aufgrund des niedrigen Ladezustands der übrigen Batteriesysteme führen würde. Das Zusatz-Batteriesystem sollte ebenfalls mit einer Stellerphase verbunden sein und bei Bedarf in Betrieb genommen werden. Um eine gleichmäßige Nutzung und Alterung der Batteriesysteme zu gewährleisten, kann das als "Power-Bank" fungierende Zusatz-Batteriesystem auch immer gewechselt werden.

Bei Fahrstrecken, die keine hohe Energieanforderung haben, kann beispielsweise die symmetrische Anbindung gewählt werden, wobei das Zusatz-Batteriesystem nicht oder nur in bestimmten Situationen wie einem Notfall verwendet wird.

Das Zusatz-Batteriesystem kann beispielsweise bei langen Bergabfahrten vorteilhaft verwendet werden, wenn dieses die beim Bremsen durch Rekuperation generierte Energie aufnimmt. Hier kann die Schaltvorgabe im Hinblick auf einen Fahrtverlauf so gewählt sein, dass das Zusatz-Bremssystem im Vorfeld der Bergabfahrt entladen wird, beispielsweise durch Unterstützung des Antriebs, um bei der Bergabfahrt eine große Menge Energie aufnehmen zu können. Damit kann der Verschleiß der mechanischen Bremsen vorteilhaft verringert werden.

Das Zusatz-Batteriesystem (die "Power Bank") kann auch zu einem der übrigen Batteriesysteme parallel geschaltet werden (wenn es EMV Anforderungen im Rahmen einer Stromungleichverteilung zulassen). Dies hätte den Vorteil, dass die zwei parallel geschalteten Batteriesysteme stärker von der Steller-Phase belastet werden müssten, um eine ungleiche Entladung aller anderen Batterien zu vermeiden.

Vorteilhaft ist ebenfalls ein Regelungsprinzip, bei welchem bei Ruhephasen, beispielsweise bei einem Halt des Fahrzeugs an einer Haltestelle, die Batterien wieder symmetrisiert werden. Dazu kann abhängig von einem Fahrtverlauf vorgegeben werden, wann ein Fahrzeug hält und während dieses Halts die Batteriesysteme mit dem niedrigsten Ladezustand von übrigen Batteriesystemen (den Zusatz-Batteriesystemen) aufgeladen werden. Diesbezüglich ist es von Vorteil, Batteriesysteme mit einem höheren Ladezustand für die Zeit des Halts als Zusatz-Batteriesysteme festzulegen. Dies erfolgt bevorzugt entsprechend des festgestellten Ladezustand, wobei die Zusatz-Batteriesysteme mit dem höchsten Ladezustand die Batteriesysteme mit dem niedrigsten Ladezustand aufladen bzw. die Zuordnung der Zusatz-Batteriesysteme zu den übrigen Batteriesystemen symmetrisch in Abhängigkeit von den jeweiligen Ladezuständen erfolgt. Dabei können denjenigen Batteriesysteme, welche am meisten Ladung benötigen, den Zusatz-Batteriesystemen mit dem höchsten Ladezustand zugeordnet werden, während denjenigen Batteriesystemen, welche am wenigsten Ladung benötigen, den Zusatz-Batteriesystemen mit dem niedrigsten Ladezustand zugeordnet werden.

Ein großer Vorteil der Erfindung besteht darin, dass bestehende Batteriesysteme auch für Streckenanforderungen verwendet werden können, für die sie hinsichtlich der Energiemenge zunächst nicht dimensioniert sind, beispielsweise indem sie eine zu geringe oder zu große Kapazität aufweisen. Diese Flexibilität ermöglicht eine deutliche Kostenersparnis im Vergleich zu Individuallösungen, die mit hohen Einmalkosten aufgrund erforderlicher Anpassungen der Batteriesysteme verbunden sind. Durch ein Durchwechseln des Zusatz-Batteriesystems wird die Gesamtlebensdauer des Traktionsbatteriesystems (hiermit sind alle auf dem Fahrzeug verbauten zur Traktion verwendeten Batteriesysteme gemeint) erhöht, da dadurch eine gleichmäßige Verwendung der Batteriesysteme erfolgen kann. Es wird dabei immer zumindest ein Batteriesystem als Zusatz-Batteriesystem weniger als die übrigen Batteriesysteme belastet, wodurch die Zyklenbelastung auf alle Batteriesysteme gesehen reduziert wird. Außerdem kann das Zusatz-Batteriesystem in dieser Zeit von Effekten profitieren, die sich positiv auf die Batterielebensdauer auswirken (beispielsweise ein ordentliches Balancing der Batteriezellen, Capacity Recovery etc.). Zusätzliche Vorteile ergeben sich durch die flexible Nutzung des Zusatz-Batteriesystems als Energiereserve oder Bremsreserve, ersteres durch eine zusätzliche Abgabe von gespeicherter Energie, letzteres durch eine zusätzliche Aufnahme rekuperierter Energie. Außerdem wird durch die erweiterte Nutzung als Bremsreserve der Verschleiß der mechanischen Bremse deutlich verringert. Dies hat wiederum positive Auswirkungen auf die Instandhaltungskosten des Fahrzeugs.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Gemäß einem bevorzugten Traktionssystem ist die Steuereinheit dazu ausgelegt, das Zusatz-Batteriesystem so zu schalten, dass ein Batteriesystem aufgeladen wird. Dies kann bevorzugt dadurch erfolgen, dass das Zusatz-Batteriesystem mittels der Schalteinheit parallel mit dem Batteriesystem verschaltet wird, wobei das Batteriesystem während des Ladens bevorzugt von dem Traktionsstromrichter getrennt ist.

Alternativ oder zusätzlich ist die Steuereinheit dazu ausgelegt, das Zusatz-Batteriesystem so zu schalten, dass die Leistungsabgabe eines Batteriesystems unterstützt wird. Dies kann bevorzugt dadurch erfolgen, dass das Zusatz-Batteriesystem mittels der Schalteinheit parallel mit dem Batteriesystem verschaltet wird, wobei das andere Batteriesystem bevorzugt mit dem Traktionsstromrichter verbunden ist.

Alternativ oder zusätzlich ist die Steuereinheit dazu ausgelegt, das Zusatz-Batteriesystem so zu schalten, dass das Zusatz-Batteriesystem mittels Rekuperation der Bewegungsenergie des Fahrzeugs aufgeladen wird. Dies kann bevorzugt dadurch erfolgen, dass das Zusatz-Batteriesystem mittels der Schalteinheit mit dem Traktionsstromrichter so verbunden wird, dass der Traktionsstromrichter das Zusatz-Batteriesystem auflädt.

Gemäß einem bevorzugten Traktionssystem ist die Schalteinheit dazu ausgelegt, das Zusatz-Batteriesystem zum Aufladen eines Batteriesystems oder zur Unterstützung eines Batteriesystems mit diesem Batteriesystem parallel zu schalten. Dabei ist die Steuereinheit dazu ausgelegt, den Ladezustand der Batteriesysteme zu bestimmen und bei Unterschreiten eines vorgegebenen Ladezustandes durch mindestens eines Batteriesysteme das Zusatz-Batteriesystem so zu schalten, dass es das betreffende Batteriesystem auflädt.

Gemäß einem bevorzugten Traktionssystem ist die Schalteinheit dazu ausgelegt, das Zusatz-Batteriesystem aufzuladen, wenn mittels Rekuperation einer Bremsleistung Energie vom Antrieb zum Traktionsstromrichter fließt. Dabei ist die Steuereinheit dazu ausgelegt, den Ladezustand des Zusatz-Batteriesystems und einen Stromfluss im Traktionsstromrichter zu bestimmen und bei Unterschreiten eines vorgegebenen Ladezustandes und/oder bei einem Stromfluss vom Antrieb zum Traktionsstromrichter das Zusatz-Batteriesystem in einen Aufladezustand zu schalten.

Ein bevorzugtes Traktionssystem umfasst zwei Traktionsstromrichter mit jeweils einer Mehrzahl von dem jeweiligen Traktionsstromrichter zugeordneten Batteriesystemen. Dabei sind die Schalteinheit und die Steuereinheit so gestaltet, dass das Zusatz-Batteriesystem für die Batteriesysteme beider Traktionsstromrichter verwendet werden kann, insbesondere zum Aufladen und/oder zum Unterstützen einer Leistungsabgabe eines Batteriesystems und/oder zum Aufladen des Zusatz-Batteriesystems mittels Rekuperation, wobei zumindest ein Traktionsstromrichter so aufgebaut ist, dass er auch das Zusatz-Batteriesystem entsprechend schalten kann und insbesondere jedes mit ihm verbundene Batteriesystem wie ein Zusatz-Batteriesystem schalten kann. Dadurch kann jedes Batteriesystem dynamisch als Zusatz-Batteriesystem genutzt werden.

Ein bevorzugtes Traktionssystem zeichnet sich dadurch aus, dass die Schalteinheit und die Steuereinheit dazu ausgestaltet sind, ein Batteriesystem aus einer Gruppe der vorhandenen Batteriesysteme (insbesondere aus allen Batteriesystemen) als Zusatz-Batteriesystem auszuwählen und entsprechend zu schalten. Dabei sind die Schalteinheit und die Steuereinheit dazu ausgestaltet, das Zusatz-Batteriesystem nach einem vorgegebenen Kriterium zu wechseln, insbesondere nach einer vorgegebenen Zeit oder nach einem vorgegebenen Betriebszustand.

Ein bevorzugtes Traktionssystem zeichnet sich dadurch aus, dass jedes Batteriesystem dieselbe Nennspannung hat. Dabei sind jeweils N Batteriesysteme mit einem Traktionsstromrichter verbunden und umfasst das Traktionssystem iN+x Batteriesysteme umfasst, wobei i der Anzahl der Traktionsstromrichter entspricht und x der Anzahl der verwendeten Zusatz-Batteriesysteme, wobei insbesondere gilt: x = 1, also ein zusätzliches Batteriesystem zur Unterstützung vorhanden ist.

Gemäß einem bevorzugten Traktionssystem wird vor oder während einer Fahrt des Fahrzeugs eine Energieanforderung für diese Fahrt überprüft und gemäß der ermittelten Energieanforderung eine Anzahl von Schaltvorgaben festgelegt. Dabei wird ermittelt, wann das Fahrzeug an einem Fahrtabschnitt eine Energieanforderung höher als ein vorgegebener oberer Grenzwert hat und in diesem Falle die Schaltvorgabe eine Zuschaltung einer Anzahl von Zusatz-Batteriesystemen vorgibt.

Alternativ oder ergänzend wird ermittelt, wann das Fahrzeug an einem Fahrtabschnitt eine Energieanforderung negative Bereiche aufweist (beispielsweise bei einer Bergabfahrt). In diesem Fall gibt die Schaltvorgabe bevorzugt eine Aufladung einer Anzahl von Zusatz-Batteriesystemen vor. Ebenfalls können in diesem Fall bereits im Vorfeld Batteriesysteme durch Unterstützung der Traktion gezielt geleert werden, um mehr Ladung bei Bremsvorgängen aufnehmen zu können.

Ein bevorzugtes Traktionssystem zeichnet sich dadurch aus, dass während einer Fahrt des Fahrzeugs der Ladezustand der Batteriesysteme überprüft wird, und das Batteriesystem mit dem höchsten Ladezustand für eine vorgegebene Zeit oder bis zu einem vorgegebenen Ladezustand als Zusatz-Batteriesystem verwendet wird. Dies hat den Vorteil, dass zum Laden oder Unterstützen eines Batteriesystems der beste Ladezustand zur Verfügung steht.

Ein bevorzugtes Traktionssystem zeichnet sich alternativ oder ergänzend dadurch aus, dass während einer Fahrt des Fahrzeugs der Ladezustand der Batteriesysteme überprüft wird und das Batteriesystem mit dem niedrigsten Ladezustand von dem Zusatz-Batteriesystem aufgeladen wird. Dies hat den Vorteil, dass zum Bremsen die größtmögliche Kapazität zur Aufnahme von rekuperierter Bremsleistung zur Verfügung steht. Hier sei angemerkt, dass zumeist anhand des Fahrtverlaufs schon vorbekannt ist, wann ein Fahrzeug bergab fahren wird. Somit kann für einen Fahrtabschnitt, beispielsweise eine Bergauffahrt, das Batteriesystem mit dem höchsten Ladezustand als Zusatz-Batteriesystem ausgewählt werden, während für einen andere Fahrtabschnitt, beispielsweise eine Bergabfahrt, das Batteriesystem mit dem niedrigsten Ladezustand ausgewählt werden.

Ein bevorzugtes Traktionssystem zeichnet sich dadurch aus, dass während einer Fahrt des Fahrzeugs der Ladezustand der Batteriesysteme überprüft wird und das Batteriesystem mit dem niedrigsten Ladezustand von dem Zusatz-Batteriesystem unterstützt wird. Dies hat den Vorteil, dass so der Ladezustand der Batteriesysteme stets ungefähr gleich gehalten wird.

Ein bevorzugtes Traktionssystem zeichnet sich dadurch aus, dass während einer Fahrt des Fahrzeugs der Ladezustand der Batteriesysteme überprüft wird und die Anzahl der verwendeten Zusatz-Batteriesysteme in Abhängigkeit vom Ladezustand der Batteriesysteme bestimmt wird. Dadurch kann je nach Anforderung die Energieverteilung optimal gestaltet werden. Beispielsweise kann während eines Halts Des Fahrzeugs die Hälfte der Batteriesysteme mit dem höchsten Ladezustand als Zusatz-Batteriesysteme festgelegt werden, welche die andere Hälfte Batteriesysteme aufladen.

Ein bevorzugtes Traktionssystem zeichnet sich dadurch aus, dass die Schalteinheit und die Steuereinheit dazu ausgestaltet sind, während eines Halts und/oder während einer Bergabfahrt des Fahrzeugs in Abhängigkeit von dem Ladezustand der Batteriesysteme, den Ladezustand einer Gruppe von Batteriesystemen, bevorzugt aller Batteriesysteme zu symmetrisieren und damit den Ladezustand der Batteriesysteme anzugleichen.

Es ist bevorzugt, dass bei einer Ausführungsform des Verfahrens zu Zeitpunkten eines Fahrtverlaufs aus Batteriesystemen eine Anzahl von Batteriesystemen dem mindestens einen Traktionsstromrichter zugeordnet werden und eine Anzahl von Batteriesystemen jeweils als Zusatz-Batteriesystem verwendet wird, wobei die Zuordnung der Batteriesysteme über einen Fahrtverlauf hinweg geändert wird.

Die Erfindung wird im Folgenden unter Hinweis auf die beigefügten Figuren anhand von Ausführungsbeispielen näher erläutert. Dabei sind in den verschiedenen Figuren gleiche Komponenten mit identischen Bezugsziffern versehen. Die Figuren sind in der Regel nicht maßstäblich. Es zeigen:
- Figur 1: ein erfindungsgemäßes Traktionssystem für ein batterieelektrisches Fahrzeug,
- Figur 2: einen bevorzugten Schaltzustand des Traktionsstromrichter-Systems nach Figur 1 zum Unterstützen eines anderen Batteriesystems,
- Figur 3: einen bevorzugten Schaltzustand des Traktionsstromrichter-Systems nach Figur 1 zum Laden anderer Batteriesysteme,
- Figur 4: einen bevorzugten Schaltzustand des Traktionsstromrichter-Systems nach Figur 1 zum Laden des Zusatz-Batteriesystems,
- Figur 5: ein batterieelektrisches Fahrzeug mit einem erfindungsgemäßen Traktionsstromrichter-System, und
- Figur 6: ein Blockdiagramm für ein erfindungsgemäßes Verfahren zum Betrieb eines erfindungsgemäßen Traktionsstromrichter-Systems.

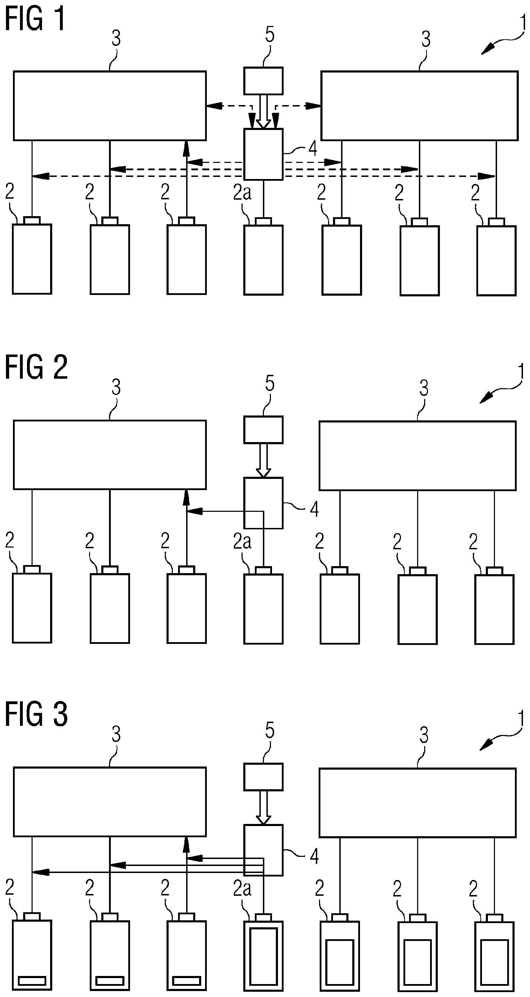

Figur 1 zeigt ein erfindungsgemäßes Traktionssystem 1 für ein batterieelektrisches Fahrzeug 6. Das Traktionssystem 1 umfasst zwei Traktionsstromrichter 3, insgesamt sieben Batteriesysteme 2, eine Schalteinheit 4 und eine Steuereinheit 5. In diesem Beispiel sind jeweils drei Batteriesysteme 2 mit einem jeweiligen Traktionsstromrichter 3 elektrisch verbunden, wobei jedes dieser Batteriesysteme 2 durch eine Phase eines nicht dargestellten Gleichspannungswandlers mit dem betreffenden Traktionsstromrichter 3 einzeln verbindbar ist.

Das in der Mitte gezeigte Batteriesystem 2 wird als Zusatz-Batteriesystem 2a verwendet und die Schalteinheit 4 dient dazu, das beispielhaft eine Zusatz-Batteriesystem 2a parallel und/oder alternativ zu einer Anzahl der anderen Batteriesysteme 2 zu schalten (siehe gestrichelte Pfeile).

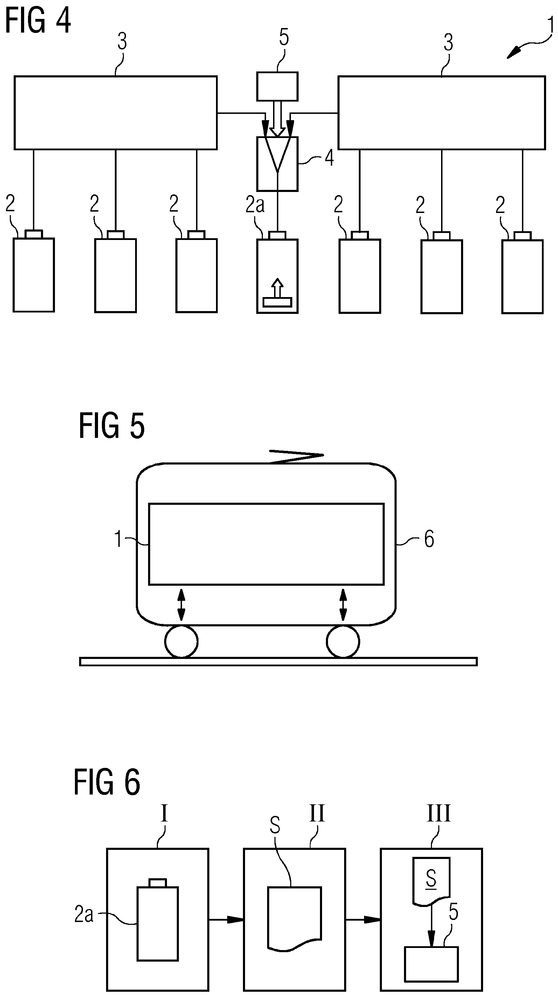

Die Steuereinheit 5 dient zur Steuerung der Schalteinheit 4 gemäß einer Schaltvorgabe S (siehe Figur 6). Die Schaltvorgabe S gibt dabei vor, in welchem Fall oder zu welchem Zeitpunkt das Zusatz-Batteriesystem 2a parallel und/oder alternativ zu einer Anzahl der anderen Batteriesysteme 2 geschaltet werden soll.

Figur 2 zeigt einen bevorzugten Schaltzustand des Traktionssystems 1 nach Figur 1 zum Unterstützen eines der Batteriesysteme 2 durch das Zusatz-Batteriesystem 2a (Pfeil). Beide Batteriesysteme 2, 2a werden in einer Parallelschaltung zur Traktion bzw. zur Speisung eines Gleichspannungszwischenkreises des linken Traktionsstromrichters 3 verwendet.

Figur 3 zeigt einen bevorzugten Schaltzustand des Traktionssystems 1 nach Figur 1 zum Laden mehrerer Batteriesysteme 2 durch das Zusatz-Batteriesystem 2a. In diesem Fall lädt das Zusatz-Batteriesystem 2a beispielhaft alle Batteriesysteme 2 des linken Traktionsstromrichters 3 auf.

Figur 4 zeigt einen bevorzugten Schaltzustand des Traktionssystems 1 nach Figur 1 zum Laden des Zusatz-Batteriesystems 2a. Demnach erhält das Zusatz-Batteriesystem 2a von beiden Traktionsstromrichtern 3 elektrische Energie, die durch Rekuperation von Bremsleistung generiert worden ist.

Figur 5 zeigt ein batterieelektrisches Fahrzeug 6 mit einem erfindungsgemäßen Traktionssystem 1. Das Fahrzeug 6 ist hier als ein Schienenfahrzeug ausgestaltet, wobei dieses eine Mehrzahl von Wagen aufweisen kann, auf welchen die Komponenten des Traktionssystems verteilt angeordnet sind. Der Stromabnehmer auf dem Dach soll andeuten, dass das Fahrzeug sowohl für eine Fahrt an einer Oberleitung eines Versorgungsnetzes als auch für einen reinen batterieelektrischen Betrieb ausgelegt ist, wenn keine Oberleitung vorhanden ist. Die mit den Traktionsstromrichtern 3 verbundenen Batteriesysteme 2 stellen dabei die für den batterieelektrischen Betrieb erforderliche elektrische Energie bereit.

Figur 6 zeigt ein Verfahren zum Betrieb eines Traktionssystems 1 nach Figur 1.

In Schritt I wird eine Anzahl von Zusatz-Batteriesystemen 2a aus den Batteriesystemen 2 des Traktionssystems 1 ausgewählt. Es wird dabei das mittlere Batteriesystem 2 aus Figur 1 als festes Zusatz-Batteriesystem 2a ausgewählt.

In Schritt II wird eine Schaltvorgabe S durch die Steuereinheit 5 des Traktionsstromrichter-Systems 1 generiert, welche so gestaltet ist, dass in Abhängigkeit von einem Fahrtverlauf und/oder einem Ladezustand und/oder einer Leistungsanforderung an die Batteriesysteme 2 das Zusatz-Batteriesystem 2a parallel zu einem anderen Batteriesystem 2 zum Aufladen und/oder zur Unterstützung geschaltet wird, und/oder das Zusatz-Batteriesystem 2a zum Aufladen verschaltet wird.

In Schritt III erfolgt ein Steuern der Schalteinheit 4 des Traktionssystems 1 gemäß der Schaltvorgabe S.

Es wird abschließend noch einmal darauf hingewiesen, dass es sich bei der vorhergehend detailliert beschriebenen Erfindung lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen Begriffe wie "Einheit" nicht aus, dass die betreffenden Komponenten aus mehreren zusammenwirkenden Teil-Komponenten bestehen, die ggf. auch räumlich verteilt sein können. Der Begriff "eine Anzahl" ist als "mindestens ein(e)" zu lesen. Unabhängig vom grammatikalischen Geschlecht eines bestimmten Begriffes sind Personen mit männlicher, weiblicher oder anderer Geschlechteridentität mit umfasst.

### Bezugszeichenliste

- 1: Traktionssystem
- 2: Batteriesystem
- 2a: Zusatz-Batteriesystem
- 3: Traktionsstromrichter
- 4: Schalteinheit
- 5: Steuereinheit
- 6: Fahrzeug
- S: Schaltvorgabe

## Patentansprüche

1. Traktionssystem (1) für ein batterieelektrisches Fahrzeug (6), umfassend:
- mindestens einen Traktionsstromrichter (3),
- eine Mehrzahl von Batteriesystemen (2), wobei jeweils mehrere Batteriesysteme (2) mit einem Traktionsstromrichter (3) elektrisch verbunden sind, und wobei jedes der Batteriesysteme (2) einzeln mittels einer Phase eines Gleichspannungswandlers mit dem Traktionsstromrichter verbindbar ist,
- mindestens ein Zusatz-Batteriesystem (2a),
- eine Schalteinheit (4), die dazu ausgelegt ist, das Zusatz-Batteriesystem (2a) parallel und/oder alternativ zu einer Anzahl der Batteriesysteme (2) zu schalten, und
- eine Steuereinheit (5), die ausgelegt ist zur Steuerung der Schalteinheit (4) gemäß einer Schaltvorgabe (S), wobei die Schaltvorgabe (S) vorgibt, in welchem Fall oder zu welchem Zeitpunkt das Zusatz-Batteriesystem (2a) parallel und/oder alternativ zu der Anzahl der Batteriesysteme (2) geschaltet werden soll.

2. Traktionssystem (1) nach Anspruch 1, wobei
die Steuereinheit (5) dazu ausgelegt ist, das Zusatz-Batteriesystem (2a) so zu schalten, dass
- ein Batteriesystem (2) aufgeladen wird, und/oder
- die Leistungsabgabe eines Batteriesystems (2) unterstützt wird, und/oder
- das Zusatz-Batteriesystem (2a) mittels Rekuperation der Bewegungsenergie des Fahrzeugs (6) aufgeladen wird.

3. Traktionssystem (1) nach einem der vorangehenden Ansprüche, wobei
die Schalteinheit (4) dazu ausgelegt ist, das Zusatz-Batteriesystem (2a) zum Aufladen eines Batteriesystems (2) oder zur Unterstützung eines Batteriesystems (2) mit diesem Batteriesystem (2) parallel zu schalten,
wobei die Steuereinheit (5) dazu ausgelegt, ist, den Ladezustand der Batteriesysteme (2) zu bestimmen und bei Unterschreiten eines vorgegebenen Ladezustandes durch mindestens eines der Batteriesysteme (2) das Zusatz-Batteriesystem (2a) so zu schalten, dass es das betreffende Batteriesystem (2) auflädt.

4. Traktionssystem (1) nach einem der vorangehenden Ansprüche, wobei die Schalteinheit (4) dazu ausgelegt ist, das Zusatz-Batteriesystem (2a) aufzuladen, wenn mittels Rekuperation einer Bremsleistung Energie vom Antrieb zum Traktionsstromrichter (3) fließt, wobei die Steuereinheit (5) dazu ausgelegt ist, den Ladezustand des Zusatz-Batteriesystems (2a) und einen Stromfluss im Traktionsstromrichter zu bestimmen und bei Unterschreiten eines vorgegebenen Ladezustands und/oder bei einem Stromfluss vom Antrieb zum Traktionsstromrichter (3) das Zusatz-Batteriesystem (2a) in einen Aufladezustand zu schalten.

5. Traktionssystem (1) nach einem der vorangehenden Ansprüche, umfassend:
zwei Traktionsstromrichter (3) mit jeweils einer Mehrzahl von dem jeweiligen Traktionsstromrichter (3) zugeordneten Batteriesystemen (2), wobei die Schalteinheit (4) und
die Steuereinheit (5) so gestaltet sind, dass das Zusatz-Batteriesystem (2a) für die Batteriesysteme (2) beider Traktionsstromrichter (3) verwendbar ist, insbesondere zum Aufladen und/oder zum Unterstützen einer Leistungsabgabe eines Batteriesystems (2) und/oder zum Aufladen des Zusatz-Batteriesystems (2a) mittels Rekuperation, wobei zumindest ein Traktionsstromrichter (3) so aufgebaut ist, dass er auch das Zusatz-Batteriesystem (2a) entsprechend schalten kann und insbesondere jedes mit ihm verbundene Batteriesystem (2) wie ein Zusatz-Batteriesystem (2a) schalten kann.

6. Traktionssystem (1) nach einem der vorangehenden Ansprüche, wobei die Schalteinheit (4) und die Steuereinheit (5) dazu ausgestaltet sind, ein Batteriesystem (2) aus einer Gruppe der vorhandenen Batteriesysteme (2) als Zusatz-Batteriesystem (2a) auszuwählen und entsprechend zu schalten, wobei die Schalteinheit (4) und die Steuereinheit (5) dazu ausgestaltet sind, das Zusatz-Batteriesystem (2a) nach einem vorgegebenen Kriterium zu wechseln, insbesondere nach einer vorgegebenen Zeit oder nach einem vorgegebenen Betriebszustand.

7. Traktionssystem (1) nach einem der vorangehenden Ansprüche, wobei jedes Batteriesystem (2) dieselbe Nennspannung hat, wobei jeweils N Batteriesysteme (2) mit einem Traktionsstromrichter (3) verbunden sind und das Traktionssystem (1) iN+x Batteriesysteme (2) umfasst, wobei i der Anzahl der Traktionsstromrichter (3) entspricht und x der Anzahl der verwendeten Zusatz-Batteriesysteme (2a), wobei insbesondere gilt: x = 1.

8. Traktionssystem (1) nach einem der vorangehenden Ansprüche, wobei vor oder während einer Fahrt des Fahrzeugs (6) eine Energieanforderung für diese Fahrt überprüft wird und gemäß der ermittelten Energieanforderung eine Anzahl von Schaltvorgaben (S) festgelegt wird,
wobei ermittelt wird, wann das Fahrzeug (6) an einem Fahrtabschnitt eine Energieanforderung höher als ein vorgegebener oberer Grenzwert hat und in diesem Falle die Schaltvorgabe (S) eine Zuschaltung einer Anzahl von Zusatz-Batteriesystemen (2a) vorgibt, und/oder wobei ermittelt wird, wann das Fahrzeug (6) an einem Fahrtabschnitt eine Energieanforderung negative Bereiche aufweist und in diesem Falle die Schaltvorgabe (S) eine Aufladung einer Anzahl von Zusatz-Batteriesystemen (2a) vorgibt.

9. Traktionssystem (1) nach einem der vorangehenden Ansprüche, wobei während einer Fahrt des Fahrzeugs (6) der Ladezustand der Batteriesysteme (2) überprüft wird und
- das Batteriesystem (2) mit dem höchsten Ladezustand für eine vorgegebene Zeit oder bis zu einem vorgegebenen Ladezustand als Zusatz-Batteriesystem (2a) verwendet wird, und/oder
- das Batteriesystem (2) mit dem geringsten Ladezustand von dem Zusatz-Batteriesystem (2a) aufgeladen und/oder unterstützt wird, und/oder
- die Anzahl der verwendeten Zusatz-Batteriesysteme (2a) in Abhängigkeit vom jeweiligen Ladezustand der Batteriesysteme (2) bestimmt wird.

10. Traktionssystem (1) nach Anspruch 9, wobei
die Schalteinheit (4) und die Steuereinheit (5) dazu ausgestaltet sind, während eines Halts und/oder während einer Bergabfahrt des Fahrzeugs (6) in Abhängigkeit von dem Ladezustand der Batteriesysteme (2), den Ladezustand einer Gruppe von Batteriesystemen (2), bevorzugt aller Batteriesysteme (2) zu symmetrisieren.

11. Verfahren zum Betreiben eines Traktionssystems (1) nach einem der vorangehenden Ansprüche, umfassend die Schritte:
- Auswählen einer Anzahl von Zusatz-Batteriesystemen (2a) aus einer Mehrzahl von Batteriesystemen (2),
- Generieren einer Schaltvorgabe (S) durch die Steuereinheit (5), wobei die Schaltvorgabe (S) derart gestaltet ist, dass in Abhängigkeit von einem Fahrtverlauf und/oder einem Ladezustand und/oder einer Leistungsanforderung an die Batteriesysteme (2) ein Zusatz-Batteriesystem (2a) parallel zu einem anderen Batteriesystem (2) zum Aufladen und/oder zur Unterstützung geschaltet wird und/oder ein Zusatz-Batteriesystem (2a) zum Aufladen verschaltet wird, und
- Steuern der Schalteinheit (4) gemäß der Schaltvorgabe (S).

12. Verfahren nach Anspruch 11 wobei
zu Zeitpunkten eines Fahrtverlaufs aus Batteriesystemen (2) eine Anzahl von Batteriesystemen (2) dem mindestens einen Traktionsstromrichter (3) zugeordnet werden und eine Anzahl von Batteriesystemen (2) jeweils als Zusatz-Batteriesystem (2a) verwendet wird,
wobei die Zuordnung der Batteriesysteme (2) über einen Fahrtverlauf hinweg geändert wird.

13. Fahrzeug (6), insbesondere batterieelektrisches Schienenfahrzeug, umfassend zumindest ein Traktionssystem (1) nach einem der Ansprüche 1 bis 10.
